# EUROPEAN PATENT APPLICATION

(11) **EP 4 640 746 A1**
(43) Date of publication of application: **29.10.2025**
(21) Application number: 24214601.7
(22) Date of filing: 21.11.2024
(51) Int. Cl.: C08G 73/10, C08G 69/26, C08G 69/40, C08G 73/18, H01M 4/62

(54) **BINDER, PREPARATION METHOD THEREOF AND LITHIUM-ION CELL**

(30) Priority: 23.04.2024 CN 202410494910; 01.07.2024 WO PCT/CN2024/102975
(71) Applicant: Eve Energy Co. Ltd., Huizhou, Guangdong 516000 (CN)
(72) Inventor: Guan, Qun, Huizhou, Guangdong, 516000 (CN); Ji, Yajuan, Huizhou, Guangdong, 516000 (CN); Xie, Yingpeng, Huizhou, Guangdong, 516000 (CN); Zhao, Ruirui, Huizhou, Guangdong, 516000 (CN); Xu, Xiaoxia, Huizhou, Guangdong, 516000 (CN)
(74) Representative: Michalski Hüttermann & Partner Patentanwälte mbB

(57) **Abstract**

A binder, including a polyamide polymer containing repeating structural units A shown in formula (I) and repeating structural units B shown in formula (II), in which R₁ is an aryl group not containing amide groups and amino groups, R₂ includes an aryl group containing at least one amide groups or at least one amino groups, and a mole ratio of the repeating structural units A to the repeating structural units B is (2: 1) to (6:1).

## Description

### TECHNICAL FIELD

The present disclosure relates to the field of electrode materials and, particularly, to a binder, a preparation method thereof, and a lithium-ion cell.

### BACKGROUND

Currently, commercial lithium-ion batteries based on graphite negative electrode materials are approaching the theoretical limit, which is difficult to meet the demand for high energy density batteries of the current information-based society. Silicon-based electrode materials are considered to be the most promising and competitive emerging electrode materials due to their relatively low discharge potential, high theoretical specific capacity and abundant reserves. However, during the charging and discharging process, the silicon-based negative electrodes suffer from repeated volume expansion and contraction, which deteriorates their mechanical and electrical performance, leading to the degradation of the cycle capacity of silicon-based batteries. Therefore, the development of polymer binders that inhibit the volume expansion of silicon particles and allow for reversible volume expansion during cycling is critical to the development of silicon-based batteries.

Currently, it is generally agreed that a polymer binder suitable for silicon-based negative electrodes should have the following key performance: there should be strong intermolecular interactions between the polymer chains to resist the volume expansion of the silicon particles. Aliphatic polymer binders, for example, inhibit the volume expansion of silicon particles by introducing cross-linking or supramolecular structures. An in situ covalently network cross-linked polymer binder is disclosed in the related technical field, consisting of PAA, carbonyl groups, and terminated isocyanate polyurethane oligomers (PUOs), and 2-ureido-4-pyrimidinone (UPy) as a reversible quadruple hydrogen bonding cross-linked agent is used as a silicon-based anode for lithium-ion batteries. Polyrotaxane is used as a sliding movement cross-linked network polymer binder in the related technical field, which integrates PAA as a linear polymer and -cyclodextrin (CD) as a cyclic supramolecular structure.

### SUMMARY

The aforementioned binder mainly relies on intermolecular forces, and the polymer is cross-linked by small interaction forces to form a backbone of low strength, which is very limited to resist the volume expansion of silicon particles. However, the aromatic polymers have a rigid and organized polymer backbone structure characterized by strong *π*-*π* bonding interactions between the polymers. This unique structure attributes excellent tensile strength to resist the large volume expansion of silicon particles, preventing the loss of connection between the silicon particles and the conductive network during charging and discharging. However, an excessively high tensile strength renders the binder inelastic and unable to function as a bonding agent.

As a first aspect, provided in the present disclosure is a binder, including a polyamide polymer containing repeating structural units A shown in formula (I) and repeating structural units B shown in formula (II):

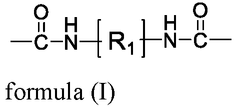

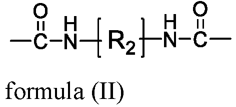

in which R₁ is an aryl group not containing amide groups and amino groups, R₂ includes an aryl group containing at least one amide groups or at least one amino groups, and
a mole ratio of the repeating structural units A to the repeating structural units B is (2:1) to (6:1).

As a second aspect, provided in the present disclosure is a preparation method of a binder, including following steps:
step 1: mixing a diamine containing aryl groups, a polyamine containing aryl groups, and organic solvent to prepare a solution 1;
step 2: mixing a dibasic acid anhydride with organic solvent to prepare a solution 2;
step 3: mixing and reacting the solution 1 and the solution 2 to prepare a solution 3;
step 4: adding ether solvent, collecting precipitate to obtain the binder,
in which a mole ratio of the diamine containing aryl groups to the polyamine containing aryl groups is (2:1) to (6:1).

As a third aspect, provided in the present disclosure is a lithium-ion cell, including the binder.

Firstly, the binder of the present disclosure includes a polyamide polymer, in which the repeating structural unit B serves as a hard segment in the polyamide polymer backbone, the relatively flexible repeating structural unit A serves as a soft segment in the polyamide polymer backbone, and a mole ratio of the repeating structural units A to the repeating structural units B is (2:1) to (6:1). In case of the mole ratio of the repeating structural units A (soft segment) to the repeating structural units B (hard segment) being in the above range, it may effectively improve the balance between hardness and softness of polyamide polymer binders, thus achieving effective inhibition of volume expansion of silicon particles while retaining flexibility and acting as a binder, and achieving volume expansion/contraction recovery of silicon-based negative electrodes during cycling.

Secondly, in the preparation method of the binder in the present disclosure, a diamine containing aryl groups and a polyamine containing aryl groups are mixed with organic solvent to prepare a solution 1, and a solution 2 containing the dibasic acid anhydride is mixed with the solution 1 and reacted to prepare the polyamide binder. The diamine containing aryl groups and the polyamine containing aryl groups being mixed to form solution 1 is to allow the diamine containing aryl groups and the polyamine containing aryl groups to react with the dibasic acid anhydride simultaneously. Although these two amine compounds react with dibasic acid anhydride at basically the same rate, it is favorable for the formation of polymers copolymerized with diamine containing aryl groups and polyamines containing aryl groups according to the stoichiometric ratio, achieving the precise control of the balance of softness and hardness of polyamide polymer binders. Also, in the present disclosure, a poor solvent, i.e., ether solvent, is adopted in step 4, and the polyamide binder prepared in step 3 is precipitated by recrystallization for isolation and purification, which is a simple method and is conducive to large-scale production and application.

Thirdly, the proposed lithium-ion cell includes the binder mentioned above, which achieves effective inhibition of volume expansion of silicon particles while retaining flexibility and acting as a binder, and achieves volume expansion/contraction recovery of silicon-based negative electrodes during cycling, leading to an increase of the cycle performance of the lithium-ion cell of the present disclosure.

### DETAILED DESCRIPTION

In some implementations, a mole ratio of the repeating structural units A to the repeating structural units B is (2:1) to (6:1), which may be, but is not limited to the values listed below, such as 2:1, 3:1, 4:1, 5:1, and 6:1, and other values in the range that are not listed are also applicable.

In some implementations, R₂ includes an aryl group containing at least one amino groups.

In the present implementation, R₂ includes aryl groups containing at least one amino groups. Amino groups on the end groups of polyamide polymer binders may form strong bonds with silicon particles. Since the polyamide polymer binder is a polymeric aromatic ring binder formed by repeating structural units A and repeating structural units B, after the amino groups on the end groups of the polyamide polymer binder are strongly bonded to the silicon particles, there is an increase in the interaction of the fused aromatic ring binder strongly bonded to the silicon particles with the conductive agent, which essentially strengthens the interaction of the silicon particles with the conductive agent, and the bonding performance of the silicon particles and the conductive agent may be improved, thereby improving the electrical performance of the silicon-based negative electrode.

In some implementations, a number-average molecular weight of the binder is 200,000 to 600,000 g/mol, which may be, but is not limited to the values listed below, such as 200,000 g/mol, 300,000 g/mol, 400,000 g/mol, 500,000 g/mol, and 600,000 g/mol, other values in the range that are not listed are also applicable.

In the present implementation, the number-average molecular weight of the binder is 200,000 to 600,000 g/mol. In the case of the number-average molecular weight of the binder being in the above range, the binder is easy to dissolve, and the dispersion effect thereof with the conductive agent is good, so that the viscosity of the slurry is proper, which is easy to coat uniformly, facilitating the subsequent processing and production. It may also form a branched cross-linked bonding structure, so that the adhesion force of the binder is improved to form a good conductive network, which improves the electrical performance of the silicon-based negative electrode.

In some implementations, a diamine containing aryl groups for providing the repeating structural units A includes at least one of 4,4'-diaminophenyl ether, p-Phenylenediamine, and 3,4'-diaminophenyl ether.

In some implementations, a polyamine containing aryl groups for providing the repeating structural units B includes at least one of 3,3'-diaminobenzidine, benzene-1,2,4,5-tetraamine, and 3,3',4,4'-tetraaminodiphenyl ether.

In some implementations, a mole ratio of the diamine containing aryl groups to the polyamine containing aryl groups is (2:1) to (6:1), which may be, but is not limited to the values listed below, such as 2:1, 3:1, 4:1, 5:1, and 6:1, other values in the range that are not listed are also applicable.

In some implementations, the dibasic acid anhydride includes at least one of 1,2,4,5-benzenetetracarboxylic anhydride (PMDA), 4,4-oxydiphthalic anhydride (ODPA), 3,3',4,4'-biphenyltetracarboxylic dianhydride (BPDA), 3,3',4,4'-diphenylsulfonetetracarboxylic dianhydride (DSDA), 2,2-bis(3,4-anhydrodicarboxyphenyl) hexafluoropropane (6FDA), 3,3',4,4'-benzophenonetetracarboxylic dianhydride (BTDA), 4,4'-(4,4'-isopropylidenediphenoxy)bis-(phthalic anhydride) (BPADA), and p-Phenylene bis(trimellitate) dianhydride (TAHQ).

In some implementations, the organic solvent is a polar solvent.

In some implementations, the polar solvent includes N,N-dimethylformamide.

In some implementations, a mole ratio of total amino groups in the diamine containing aryl groups and the polyamine containing aryl groups to anhydride groups in the dibasic acid anhydride is (3-6): 1, which may be, but is not limited to the values listed below, such as 3:1, 4:1, 5:1, and 6:1, other values in the range that are not listed are also applicable.

In the present implementation, the mole ratio of total amino groups in the diamine containing aryl groups and the polyamine containing aryl groups to anhydride groups in the dibasic acid anhydride is (3-6): 1. With the mole ratio being in the above range, the polyamide polymer binder obtained from the reaction may not only have enough amino groups that form a strong bond with silicon particles to improve the bonding performance to silicon particles, but also form a rich branched cross-linked structure, in which the branched cross-linked structure strongly bound to the silicon particles leads to an increase in the interaction between the binder and the conductive agent, which essentially enhances the interaction between silicon particles and the conductive agent, which may improve the bonding performance of the silicon particles and the conductive agent, and improve the electrical performance of the silicon-based negative electrode.

In some implementation, a temperature when mixing the dibasic acid anhydride with organic solvent in step 2 is -30 °C to 5 °C, which may be, but is not limited to the values listed below, such as -30 °C, -20 °C, -10 °C, 0 °C, and 5 °C, and other values in the range but not listed are also applicable.

In some implementations, mixing the solution 1 and the solution 2 in step 3 for reaction include adding solution 2 dropwise into solution 1.

In step 3 of the present implementation, the solution 1 and the solution 2 are specifically mixed for reaction by adding the solution 2 dropwise to solution 1. The addition sequence of adding dibasic acid anhydride to the solution 1, a mixture containing diamines containing aryl groups and polyamines containing aryl groups, improves the conversion rate of the dibasic acid anhydride, thereby increasing the yield of the branched cross-linked polymerized binder. Also, by adopting the dropwise addition method, the diamines containing aryl groups and the polyamines containing aryl groups may be sufficiently polymerized and cross-linked with the dibasic acid anhydride, thereby improving the efficiency of the soft-hard balance synthesis.

In some implementations, in step 4, the ether solvent includes at least one of diethyl ether, propylene oxide, 2-Phenoxyethanol, 2,2'-dichlorodiethylether, benzyl ether, tetrahydropyran, cyclopentyl methyl ether, and s-Trioxane.

### Example 1

Step 1: 40 mmol of 4,4'-diaminophenyl ether and 10 mmol of 3,3'-diaminobenzidine were added to a two-necked round flask, then 30 mL of N,N-dimethylformamide solvent was added, the mixture was stirred at room temperature until complete dissolution to obtain the solution 1, and the solution 1 was set aside;
Step 2: 15 mmol of 1,2,4,5-benzenetetracarboxylic anhydride was dissolved in 10 mL of N,N-dimethylformamide at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 30 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 210,000.

### Example 2

Step 1: 20 mmol of p-Phenylenediamine and 10 mmol of benzene-1,2,4,5-tetraamine were added to a two-necked round flask, then 15 mL of N,N-dimethylformamide solvent was added, the mixture was stirred at room temperature until complete dissolution to obtain the solution 1, and the solution 1 was set aside;
Step 2: 13 mmol of 4,4-oxydiphthalic anhydride was dissolved in 11 mL of N,N-dimethylformamide at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 35 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 230,000.

### Example 3

Step 1: 60 mmol of 3,4'-diaminophenyl ether and 10 mmol of 3,3',4,4'-tetraaminodiphenyl ether were added to a two-necked round flask, then 50 mL of N,N-dimethylformamide solvent was added, the mixture was stirred at room temperature until complete dissolution to obtain the solution 1, and the solution 1 was set aside;
Step 2: 13 mmol of 3,3',4,4'-biphenyltetracarboxylic dianhydride was dissolved in 12 ml of N,N-dimethylformamide solvent at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 40 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 220,000.

### Example 4

Step 2: 120 mmol of 1,2,4,5-benzenetetracarboxylic anhydride was dissolved in 80 mL of N,N-dimethylformamide at 0 °C to obtain the solution 2, and the solution 2 was set aside; Step 4: 80 mL of diethyl ether was added. The number-average molecular weight of the binder was 240,000, and the others were the same as in Example 1.

### Example 5

The mixed solution 3 was stirred and reacted for 1 h at room temperature in the present example. The number-average molecular weight of the binder was 190,000, and the others were the same as in Example 1.

### Example 6

Step 1: 40 mmol of 4,4'-diaminophenyl ether was added to a two-necked round flask, then 24 mL of N,N-dimethylformamide solvent was added, the mixture was stirred at room temperature until complete dissolution to obtain the solution 1, and the solution 1 was set aside;
Step 2: 10 mmol of 3,3'-diaminobenzidine was added to a two-necked round flask, then 6 mL of N,N-dimethylformamide solvent was added, the mixture was stirred at room temperature until complete dissolution to obtain the solution 1, and the solution 2 was set aside;
Step 3: 15 mmol of 1,2,4,5-benzenetetracarboxylic anhydride was dissolved in 10 mL of N,N-dimethylformamide solvent at 0 °C to obtain the solution 3, and the solution 3 was set aside;
Step 4: the solution 3 in step 3 was added dropwise to the solution 1 in step 1, the mixture was stirred and reacted for 10 h at room temperature, the mixed solution 4 was obtained after the reaction was finished, and the mixed solution 4 was set aside;
Step 5: the solution 2 in step 2 was added dropwise to the solution 4 in step 4, the mixture was stirred and reacted for 10 h at room temperature, the mixed solution 5 was obtained after the reaction was finished, and the mixed solution 5 was set aside;
Step 6: 30 mL of diethyl ether was added to the mixed solution 5, the polymer precipitate was collected, then the polymer precipitate was rinsed with deionized water, then the polymerized precipitate was vacuum dried at room temperature, and finally the binder powder was obtained, with the number-average molecular weight of the binder being 210,000.

### Contrast Example 1

Step 1: 40 mmol of 4,4'-diaminophenyl ether was added to a two-necked round flask, then 24 mL of N,N-dimethylformamide solvent was added, the mixture was stirred at room temperature until complete dissolution to obtain the solution 1, and the solution 1 was set aside;
Step 2: 10 mmol of 1,2,4,5-benzenetetracarboxylic anhydride was dissolved in 7 mL of N,N-dimethylformamide solvent at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 25 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 180,000.

### Contrast Example 2

Step 1: 10 mmol of 3,3'-diaminobenzidine was added to a two-necked round flask, then 6 mL of N,N-dimethylformamide solvent was added, the mixture was stirred at room temperature until complete dissolution to obtain the solution 1, and the solution 1 was set aside;
Step 2: 5 mmol of 1,2,4,5-benzenetetracarboxylic anhydride was dissolved in 4 mL of N,N-dimethylformamide solvent at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 10 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 270,000.

### Contrast Example 3

Step 1: 10 mmol of 4,4'-diaminophenyl ether and 10 mmol of 3,3'-diaminobenzidine were added to a two-necked round flask, then 12 mL of N,N-dimethylformamide solvent was added, the mixture was stirred at room temperature until complete dissolution to obtain the solution 1, and the solution 1 was set aside;
Step 2: 7.5 mmol of 1,2,4,5-benzenetetracarboxylic anhydride was dissolved in 6 mL of N,N-dimethylformamide solvent at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 15 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 240,000.

### Contrast Example 4

Step 1: 80 mmol of 4,4'-diaminophenyl ether and 10 mmol of 3,3'-diaminobenzidine were added to a two-necked round flask, then 55 mL of N,N-dimethylformamide solvent was added, the mixture was stirred at room temperature until complete dissolution to obtain the solution 1, and the solution 1 was set aside;
Step 2: 25 mmol of 1,2,4,5-benzenetetracarboxylic anhydride was dissolved in 17 mL of N,N-dimethylformamide solvent at 0 °C to obtain the solution 2, and the solution 2 was set aside;
Step 3: the solution 2 in step 2 was added dropwise to the solution 1 in step 1, the mixture was stirred and reacted for 15 h at room temperature, the mixed solution 3 was obtained after the reaction was finished, and the mixed solution 3 was set aside; and
Step 4: 45 mL of diethyl ether was added to the mixed solution 3, the polymer precipitate was collected, then the polymer precipitate was rinsed with deionized water, then the polymerized precipitate was vacuum dried at room temperature, and finally the binder powder was obtained, with the number-average molecular weight of the binder being 195,000.

### Performance Test:

### 1. Preparation of the lithium-ion cell

A lithium-ion cell was prepared according to the following process steps:

### (1) Preparation of a negative electrode plate

Silicon carbon powder was used as the negative electrode active material, the binders prepared by the above examples and contrast examples were added with conductive agent of acetylene black, and thickening agent of CMC (sodium carboxymethyl cellulose) to be mixed well, in which a mass ratio of the silicon carbon powder, binder, conductive agent of acetylene black, and thickening agent of CMC is 96.4: 1.4: 1: 1.2. The solvent of deionized water was added, the mixture was stirred under the action of vacuum mixer until the system was homogeneous, and then sieved with a 150-mesh sieve to obtain the silicon-based negative electrode slurry with good homogeneity.

Copper foil was used as the current collector, the silicon-based negative electrode slurry obtained was coated on both surfaces of the negative electrode current collector of the copper foil using an automatic coating machine, dried at 85 °C, and calendered, and then the electrode plate is die-cut by an automatic die-cutting machine to obtain the silicon-based negative electrode plate.

### (2) Preparation of a positive electrode plate

Ternary positive electrode material of NCM (lithium nickel cobalt manganese oxide) powder, binder of PVDF (polyvinylidene fluoride), and conductive agent of acetylene black were mixed in terms of a mass ratio of 96: 2: 2. The solvent of 1-methyl-2-pyrrolidinone was added, the mixture was stirred under the action of vacuum mixer until the system was homogeneous, and then sieved with a 150-mesh sieve to obtain the positive electrode slurry with good homogeneity.

Aluminum foil was used as the current collector, the positive electrode slurry obtained was coated on both surfaces of the positive electrode current collector of the aluminum foil using an automatic coating machine, dried at 120 °C, and calendered, and then the electrode plate is die-cut by an automatic die-cutting machine to obtain the positive electrode plate.

### (3) Preparation of an electrolyte

Ethylene carbonate (EC), ethyl methyl carbonate (EMC), diethyl carbonate (DEC) were mixed in a volume ratio of 1:1:1 to obtain an organic solvent, and sufficiently dried lithium salt LiPF6 was dissolved in the above organic solvent to formulate an electrolyte with a concentration of 1 mol/L.

### (4) Preparation of a separator

Polyethylene film was selected as the separator.

### (5) Assembly of a cell

The negative electrode plate, positive electrode plate and separator obtained above were stacked in an automatic stacking machine in a "Z" pattern, with 5 layers, and then the positive electrode tabs and negative electrode tabs were pre-welded and fine-welded with a laser welding machine. Then, it was encapsulated with an aluminum-plastic film, vacuum baked, transferred to a dew-point controlled environment, and the electrolyte obtained above was taken for liquid injection and sealed to obtain a lithium-ion cell.

### 1. Performance test of the electrode plate:

### Adhesion force test

The negative electrode plate was cut into test specimens of 20 mm × 100 mm size, and set aside. The electrode plate was bonded with double-sided adhesive on a side of the negative electrode film layer to be adhered to the separator and compacted with a pressing roller, so that the double-sided adhesive was completely adhered to the electrode plate. The opposite side of the double-sided adhesive was adhered to the stainless steel surface, and one end of the specimen was bent in reverse at an angle of 180°. Using a tensile machine test made by Gotech, one end of stainless steel was fixed in the fixture below the tensile machine, the bent end of the specimen was fixed in the fixture above, the angle of the specimen was adjusted to ensure that the upper and lower ends were positioned in the perpendicular position, then the specimen was stretched at a speed of 50 mm/min until the current collector was all peeled off from the negative electrode film plate, and the displacements and the forces in the process were recorded. The force at force equilibrium is divided by the width of the electrode plate adhered to the double-sided adhesive (the direction of the width of the electrode plate is perpendicular to the peeling direction) as the adhesion force per unit length of the electrode plate, and the width of the electrode plate in the test is 20 mm.

### Thickness expansion rate

A lithium-ion cell was subjected to repeated charge/discharge tests for 100 times at a current density of a rate of 0.1 C in a charge/discharge interval of 0.005 V to 1.5 V to obtain the thickness expansion rate of the lithium-ion cell after cycling for 100 cycles, and the thickness expansion rate of the lithium-ion cell was obtained as follows: thickness expansion rate of the lithium-ion cell = (thickness of the negative electrode plate after cycling - thickness of the initial negative electrode plate)/(thickness of the initial negative electrode plate)×100%.

### 2. Battery Performance Test

### Cycle performance test:

The prepared batteries were charged and discharged at a rate of 1 C, at 25 °C, with a voltage range set to 2.5 V to 4.3 V, for a full charge-discharge cycle test with 1000 cycles and the capacity retention rate was recorded.

The performance test results for the above examples and contrast examples are shown in Table 1 below.

**Table 1**

| Groups | Electrode plate performance | | Battery performance |
|---|---|---|---|
| | Adhesion force (N/m) | Thickness expansion rate (%) | Cycle capacity retention rate (%) |
| Example 1 | 2.5 | 150 | 90 |
| Example 2 | 2.4 | 155 | 88 |
| Example 3 | 2.6 | 154 | 89 |
| Example 4 | 2.3 | 157 | 87 |
| Example 5 | 2.3 | 156 | 86 |
| Example 6 | 2.2 | 158 | 85 |
| Contrast Example 1 | 1.7 | 168 | 80 |
| Contrast Example 2 | 1.6 | 169 | 79 |
| Contrast Example 3 | 1.9 | 158 | 83 |
| Contrast Example 4 | 2.1 | 162 | 82 |

As is evident from Table 1, the binders prepared in Examples 1-3 were used to prepare the negative electrode plates, and the adhesion forces were all ≥ 2.4 N/m by the above adhesion force test; and the thickness expansion rates of the negative electrode plates were all ≤ 155% by the above thickness expansion rate test of the negative electrode plates. The binders prepared in Examples 1-3 were used to prepare lithium-ion cells, and the cycle capacity retention rates were all ≥ 88% by the cycle performance tests described above. The technical effects of the binders prepared in Examples 1-3 fully exemplify that the binders prepared in the present disclosure may achieve precise regulation of the balance of softness and hardness of binder made of polyamide polymers, so as to achieve effective suppression of volume expansion of silicon particles of the negative electrode active material while retaining elasticity and performing the role of adhesion, and to achieve volume expansion/contraction restoration of the silicon-based negative electrodes in the cycling process.

Compared to Example 1, in the preparation method of Example 4, a mole ratio of total amino groups in the diamine containing aryl groups and the polyamine containing aryl groups to anhydride groups in the dibasic acid anhydride is 1: 2. In the polymerization reaction, the amino groups in the diamine containing aryl groups and the polyamine containing aryl groups are almost completely reacted, so that there is almost no remaining amino groups that may form a strong bond with the silicon particles of the negative electrode active material, which reduces the adhesion performance to the silicon particles and weakens the electrical performance of the silicon-based negative electrode. That is, the binder prepared by Example 4 was used to prepare the negative electrode plate, and the adhesion force was 2.3 N/m (less than 2.5 N/m of Example 1) by the adhesion force test described above; and the thickness expansion rate of the negative electrode plate was 157% (greater than 150% of Example 1) by the test described above for the thickness expansion rate of the negative electrode plate. The binder prepared by Example 4 was used to prepare a lithium-ion cell, and the cycling capacity retention rate was 87% (less than 90% in Example 1) by the cycling performance test described above.

Compared to Example 1, the polymerization reaction in the preparation method of Example 5 was carried out for 1 h, which is less than the 15h in Example 1. The number-average molecular weight of the binder prepared in Example 5 is 190,000, less than 210,000 in Example 1, and does not fall into the preferred range of number-average molecular weight of the binder of 200,000 to 600,000 g/mol. The binder prepared by Example 5 has a relatively small number-average molecular weight and forms fewer branched cross-linked bonding structures. The adhesion force of the binder is lowered, and the formation of a conductive network is poorer, which reduces the electrical performance of the silicon-based negative electrode. That is, the binder prepared by Example 5 was used to prepare the negative electrode plate, and the adhesion force was 2.3 N/m (less than 2.5 N/m of Example 1) by the adhesion force test described above; and the thickness expansion rate of the negative electrode plate was 156% (greater than 150% of Example 1) by the test described above for the thickness expansion rate of the negative electrode plate. The binder prepared by Example 5 was used to prepare a lithium-ion cell, and the cycling capacity retention rate was 86% (less than 90% in Example 1) by the cycling performance test described above.

Compared to Example 1, the preparation method of Example 6 differs from Example 1 in that the polymerization reaction in Example 6 is that 4,4'-diaminophenyl ether (diamine containing aryl groups) is first reacted with 1,2,4,5-benzenetetracarboxylic anhydride (dibasic acid anhydride), and the reaction is followed by the addition of 3,3'-diaminobenzidine (polyamine containing aryl groups). The preparation method of Example 6 allows the diamine containing aryl groups (4,4'-diaminophenyl ether) and the polyamine containing aryl groups (3,3'-diaminobenzidine) to participate in different chances with the dibasic acid anhydride (1,2,4,5-benzenetetracarboxylic anhydride), which is not conducive to the formation of the polymers containing the diamine containing aryl groups and the polyamine containing aryl groups in accordance with the stoichiometric ratios of the raw materials, and it is relatively difficult to achieve a precise regulation of the balance of softness and hardness of the binder containing polyamide polymers. That is, the binder prepared by Example 6 was used to prepare the negative electrode plate, and the adhesion force was 2.2 N/m (less than 2.5 N/m of Example 1) by the adhesion force test described above; and the thickness expansion rate of the negative electrode plate was 158% (greater than 150% of Example 1) by the test described above for the thickness expansion rate of the negative electrode plate. The binder prepared by Example 6 was used to prepare a lithium-ion cell, and the cycling capacity retention rate was 85% (less than 90% in Example 1) by the cycling performance test described above.

Compared to Example 1, only 4,4'-diaminophenyl ether (diamine containing aryl groups) was used in the preparation method of Contrast Example 1, that is, the binder prepared in Contrast Example 1 has only soft segments, which form a backbone of relatively low strength, thereby leading to a limited resistance to the volume expansion of the silicon particles of the negative electrode active material. That is, the binder prepared by Contrast Example 1 was used to prepare the negative electrode plate, and the adhesion force was 1.7 N/m (less than 2.5 N/m of Example 1) by the adhesion force test described above; and the thickness expansion rate of the negative electrode plate was 168% (greater than 150% of Example 1) by the test described above for the thickness expansion rate of the negative electrode plate. The binder prepared by Contrast Example 1 was used to prepare a lithium-ion cell, and the cycling capacity retention rate was 80% (less than 90% in Example 1) by the cycling performance test described above.

Compared to Example 1, only 3,3'-diaminobenzidine (polyamine containing aryl gorups) was used in the preparation method of Contrast Example 2, that is, the binder prepared in Contrast Example 2 has only hard segments. The aromatic polymers have a rigid and organized polymer backbone structure characterized by strong π-π bonding interactions between the polymers. This unique structure attributes excellent tensile strength to resist the large volume expansion of silicon particles, preventing the loss of connection between the silicon particles and the conductive network during charging and discharging. However, excessive tensile strength renders the binder inelastic and prevents it from functioning as a bonding agent. That is, the binder prepared by Contrast Example 2 was used to prepare the negative electrode plate, and the adhesion force was 1.6 N/m (less than 2.5 N/m of Example 1) by the adhesion force test described above; and the thickness expansion rate of the negative electrode plate was 169% (greater than 150% of Example 1) by the test described above for the thickness expansion rate of the negative electrode plate. The binder prepared by Contrast Example 2 was used to prepare a lithium-ion cell, and the cycling capacity retention rate was 79% (less than 90% in Example 1) by the cycling performance test described above.

Compared to Example 1, less 4,4'-diaminophenyl ether (diamine containing aryl groups) was used in the preparation method of Contrast Example 3, that is, the binder prepared by Contrast Example 3 has less soft segments and more hard segments than those in Exmaple 1, which allows the binder to have excellent tensile strength to resist the large volume expansion of silicon particles, preventing the loss of connection between the silicon particles and the conductive network during charging and discharging. However, excessive tensile strength renders the binder inelastic and prevents it from functioning as a bonding agent. That is, the binder prepared by Contrast Example 3 was used to prepare the negative electrode plate, and the adhesion force was 1.9 N/m (less than 2.5 N/m of Example 1) by the adhesion force test described above; and the thickness expansion rate of the negative electrode plate was 158% (greater than 150% of Example 1) by the test described above for the thickness expansion rate of the negative electrode plate. The binder prepared by Contrast Example 3 was used to prepare a lithium-ion cell, and the cycling capacity retention rate was 83% (less than 90% in Example 1) by the cycling performance test described above.

Compared to Example 1, less 3,3'-diaminobenzidine (polyamine containing aryl gorups) was used in the preparation method of Contrast Example 4, that is, the binder prepared by Contrast Example 4 has less hard segments and more soft segments than those in Exmaple 1, which form a backbone of relatively low strength, thereby leading to a limited resistance to the volume expansion of the silicon particles of the negative electrode active material. That is, the binder prepared by Contrast Example 4 was used to prepare the negative electrode plate, and the adhesion force was 2.1 N/m (less than 2.5 N/m of Example 1) by the adhesion force test described above; and the thickness expansion rate of the negative electrode plate was 162% (greater than 150% of Example 1) by the test described above for the thickness expansion rate of the negative electrode plate. The binder prepared by Contrast Example 4 was used to prepare a lithium-ion cell, and the cycling capacity retention rate was 82% (less than 90% in Example 1) by the cycling performance test described above.

## Claims

1. A binder, comprising a polyamide polymer containing repeating structural units A shown in formula (I) and repeating structural units B shown in formula (II): 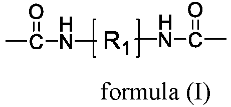 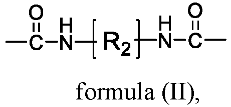
wherein R₁ is an aryl group not containing amide groups and amino groups, R₂ comprises an aryl group containing at least one amide groups or at least one amino groups, and
a mole ratio of the repeating structural units A to the repeating structural units B is (2:1) to (6:1).

2. The binder according to claim 1, wherein R₂ comprises an aryl group containing at least one amino groups.

3. The binder according to claim 1, wherein a number-average molecular weight of the binder is 200,000 to 600,000 g/mol.

4. The binder according to claim 1, wherein a diamine containing aryl groups for providing the repeating structural units A comprises at least one of 4,4'-diaminophenyl ether, p-Phenylenediamine, and 3,4'-diaminophenyl ether.

5. The binder according to claim 1, wherein a polyamine containing aryl groups for providing the repeating structural units B comprises at least one of 3,3'-diaminobenzidine, benzene-1,2,4,5-tetraamine, and 3,3',4,4'-tetraaminodiphenyl ether.

6. A preparation method of a binder, comprising following steps:
step 1: mixing a diamine containing aryl groups and a polyamine containing aryl groups with organic solvent to prepare a solution 1;
step 2: mixing a dibasic acid anhydride with organic solvent to prepare a solution 2;
step 3: mixing and reacting the solution 1 and the solution 2 to prepare a solution 3; and
step 4: adding ether solvent, collecting precipitate to obtain the binder,
wherein a mole ratio of the diamine containing aryl groups to the polyamine containing aryl groups is (2:1) to (6:1).

7. The preparation method of the binder according to claim 6, wherein the dibasic acid anhydride comprises at least one of 1,2,4,5-benzenetetracarboxylic anhydride, 4,4-oxydiphthalic anhydride, 3,3',4,4'-biphenyltetracarboxylic dianhydride, 3,3',4,4'-diphenylsulfonetetracarboxylic dianhydride, 2,2-bis(3,4-anhydrodicarboxyphenyl) hexafluoropropane, 3,3',4,4'-benzophenonetetracarboxylic dianhydride, 4,4'-(4,4'-isopropylidenediphenoxy)bis-(phthalic anhydride), and p-Phenylene bis(trimellitate) dianhydride.

8. The preparation method of the binder according to claim 6, wherein a mole ratio of total amino groups in the diamine containing aryl groups and the polyamine containing aryl groups to anhydride groups in the dibasic acid anhydride is (3-6): 1.

9. The preparation method of the binder according to claim 6, wherein a temperature for mixing the dibasic acid anhydride with the organic solvent in step 2 is -30°C to 5°C.

10. A lithium-ion cell, comprising a binder as claimed in any one of claims 1-5 or a binder prepared by a preparation method as claimed in any one of claims 6-9.
